# EUROPÄISCHE PATENTSCHRIFT

(11) **EP 2 374 642 B1**
(45) Veröffentlichungstag und Bekanntmachung des Hinweises auf die Patenterteilung: **19.12.2012**
(21) Anmeldenummer: 11003039.2
(22) Anmeldetag: 11.04.2011
(51) Int. Cl.: B60H 1/34

(54) **Luftausströmer**
Air vent
Dispositif d'écoulement d'air

(30) Priorität: 12.04.2010 DE 102010014575
(43) Veröffentlichungstag der Anmeldung: 12.10.2011
(73) Patentinhaber: TRW Automotive Electronics & Components GmbH, 78315 Radolfzell (DE)
(72) Erfinder: Steinbeiß, Sabine, 95100 Selb (DE); Krause, Reinhard, 95615 Marktredwitz-Brand (DE)
(74) Vertreter: Prinz & Partner

(56) Entgegenhaltungen:
- EP-A1- 2 181 874
- DE-U1-202005 000 794
- DE-U1-202008 008 891

## Beschreibung

Die Erfindung betrifft einen Luftausströmer mit einem Gehäuse und einer im Gehäuse verschwenk- und verdrehbar gelagerten Luftleiteinrichtung, die eine allgemein kugelabschnittsförmige Außenfläche aufweist.

Solche Luftausströmer sind in verschiedenen Ausgestaltungen aus dem Stand der Technik bekannt. Sie dienen allgemein dazu, das Volumen und die Richtung eines Luftstroms, der einem Fahrzeuginnenraum zur Klimatisierung zugeführt wird, in der gewünschten Weise einzustellen. Aus der WO 2008 128820 A1 ist beispielsweise ein Luftausströmer mit einer im Wesentlichen kugelabschnittsförmigen Luftleiteinrichtung bekannt, die über mehrere Silikonflächen im Gehäuse gelagert ist. Bei längerer Benutzung und der daraus resultierenden Komprimierung bzw. Abnutzung der Gleitflächen kann es allerdings hier zu einem größeren Spiel der Luftleiteinrichtung im Gehäuse kommen. Ein weiterer Luftausströmer ist aus der DE 20 2005 000 794 U1 bekannt. Die Luftleiteinrichtung ist hier über zwei Lagerungen befestigt, in der die Luftleiteinrichtung verdrehbar und verschwenkbar im Gehäuse gelagert ist. Auch bei diesem Luftausströmer kann es bei längerem Gebrauch durch die Abnutzung der Lagerungen bzw. den Verschleiß zu einem größeren Spiel der Luftleiteinrichtung kommen. Zudem sind durch die Lagerungen Kanäle gebildet, durch die Luft an der Luftleiteinrichtung vorbei in den Innenraum gelangen kann.

Aufgabe der Erfindung ist es, einen Luftausströmer zu schaffen, der dauerhaft funktionsfähig und dabei kostengünstig herzustellen ist.

Zur Lösung der Aufgabe ist ein Luftausströmer mit einem Gehäuse und einer im Gehäuse verschwenk- und verdrehbar gelagerten Luftleiteinrichtung vorgesehen, die eine allgemein kugelabschnittsförmige Außenfläche aufweist. Der Luftausströmer weist ein Gleitlager mit einer am Gehäuse vorgesehenen, der Luftleiteinrichtung zugewandten ersten Gleitfläche und einer an der Luftleiteinrichtung vorgesehenen zweiten Gleitfläche auf, sowie eine zwischen Gehäuse und Luftleiteinrichtung angeordnete Lagerung, mit der die Luftleiteinrichtung um zumindest eine Schwenkachse verschwenkbar am Gehäuse gelagert ist. Die Lagerung ist dem Gleitlager in radialer Richtung gegenüberliegend angeordnet. An der Lagerung ist eine Vorspanneinrichtung vorgesehen, die die Luftleiteinrichtung mit einer gegen das Gleitlager gerichteten Kraft beaufschlagen kann. Die Vorspanneinrichtung bietet die Möglichkeit, ein während der Benutzung des Luftausströmers entstehendes Spiel der Lagerung bzw. des Gleitlagers auszugleichen bzw. zu reduzieren. Zu diesem Zweck beaufschlagt die Vorspanneinrichtung die Luftleiteinrichtung mit einer gegen das Gleitlager gerichteten Kraft. Anders ausgedrückt wird die Luftleiteinrichtung durch die Vorspanneinrichtung gegen das Gleitlager gedrückt, sodass die Luftleiteinrichtung spielfrei im Gehäuse gelagert ist.

Die Vorspanneinrichtung kann beispielsweise ein Federelement aufweisen, das die Luftleiteinrichtung mit einer gegen das Gleitlager gerichteten Kraft beaufschlagen kann. Das Federelement beaufschlagt die Luftleiteinrichtung konstant mit einer gegen das Gleitlager gerichteten Kraft, sodass ein Nachjustieren der Vorspanneinrichtung entfällt. Die Luftleiteinrichtung ist dadurch dauerhaft spielfrei im Gehäuse gelagert.

Es ist auch denkbar, dass die Vorspanneinrichtung eine Stellvorrichtung aufweist, mit der die gegen das Gleitlager gerichtete Kraft eingestellt werden kann. Durch die Stellvorrichtung ist zum einen beispielsweise bei einem größer werdenden Spiel der Luftleiteinrichtung im Gehäuse ein Nachjustieren der gegen das Gleitlager gerichteten Kraft möglich. Zum anderen kann der Anpressdruck der Luftleiteinrichtung am Gleitlager und somit der Widerstand gegen Verdrehen oder Verschwenken der Luftleiteinrichtung im Gehäuse eingestellt werden. Mit einer geeigneten Stellvorrichtung kann beispielsweise auch die Federkraft, mit der ein Federelement gegen die Luftleiteinrichtung drückt, eingestellt werden.

Vorzugsweise weist zumindest eine der Gleitflächen ein Gleitelement aus einem flexibel nachgiebigen Material, insbesondere TPE, TPU, Silikon oder Naturkautschuk auf. Diese Materialien gewährleisten zum einen ein reibungsarmes Gleiten der Luftleiteinrichtung im Gehäuse, sodass ein einfaches Verdrehen und/oder Verschwenken der Luftleiteinrichtung möglich ist. Zum anderen bieten diese Materialien aufgrund ihrer flexiblen Eigenschaften eine Dämpfungsfunktion, sodass die Luftleiteinrichtung spielfrei im Gehäuse gelagert werden kann.

Um die Dichtigkeit des Gehäuses zu erhöhen, können am Gehäuse und/oder der Luftleiteinrichtung Aussparungen vorgesehen sein, in der das Gleitelement zumindest teilweise liegt. Die Luftleiteinrichtung kann so mit minimalem Spaltmaß im Gehäuse montiert werden, sodass zwischen Gehäuse und Luftleiteinrichtung kein oder nur ein sehr schmaler Spalt vorhanden ist, was einen Leckstrom verhindert oder stark verringert.

Die Lagerung weist beispielsweise eine Schiene und einen an der Schiene verschiebbaren Gleiter auf. Die Schiene ist vorzugsweise gekrümmt ausgebildet, so dass diese in den Spalt zwischen Luftleiteinrichtung und Gehäuse eingebaut werden kann. Der Gleiter wird bei einem Verschwenken der Luftleiteinrichtung auf der Schiene verschoben.

Der Gleiter ist beispielsweise an der Luftleiteinrichtung befestigt. In diesem Fall ist die Schiene in Verschiebungsrichtung des Gleiters fest am Gehäuse gelagert, sodass bei einem Verschwenken der Luftleiteinrichtung der Gleiter auf der Schiene verschoben wird.

Um eine zusätzliche Beweglichkeit der Luftleiteinrichtung zu gewährleisten, weist die Lagerung beispielsweise einen Schwenkzapfen auf, um den die Luftleiteinrichtung verschwenkt werden kann. Die Schwenkachse des Schwenkzapfens liegt dabei vorzugsweise senkrecht zur Schwenkachse der Schiene und des in der Schiene gelagerten Gleiters, sodass der Luftausströmer einen großen Einstellbereich aufweist.

Vorzugsweise koppelt der Schwenkzapfen die Schiene mit dem Gehäuse, das heißt, die Schiene ist durch den Schwenkzapfen dreh- oder schwenkbar im Gehäuse gelagert.

Um ein Vorbeiströmen der Luft an der Luftleiteinrichtung durch den Spalt zwischen Luftleiteinrichtung und Gehäuse zu verhindern, kann zwischen Gehäuse und Luftleiteinrichtung ein Dichtungselement vorgesehen sein. Dieses Dichtungselement ist beispielsweise ringförmig ausgebildet, sodass dieses den gesamten Spalt zwischen Gehäuse und Luftleiteinrichtung abdeckt.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Luftausströmers,
- Figur 2 eine erste Explosionsansicht des Luftausströmers aus Figur 1,
- Figur 3 eine zweite Explosionsansicht des Luftausströmers aus Figur 1,
- Figur 4 eine Schnittansicht durch den Luftausströmer aus Figur 1.

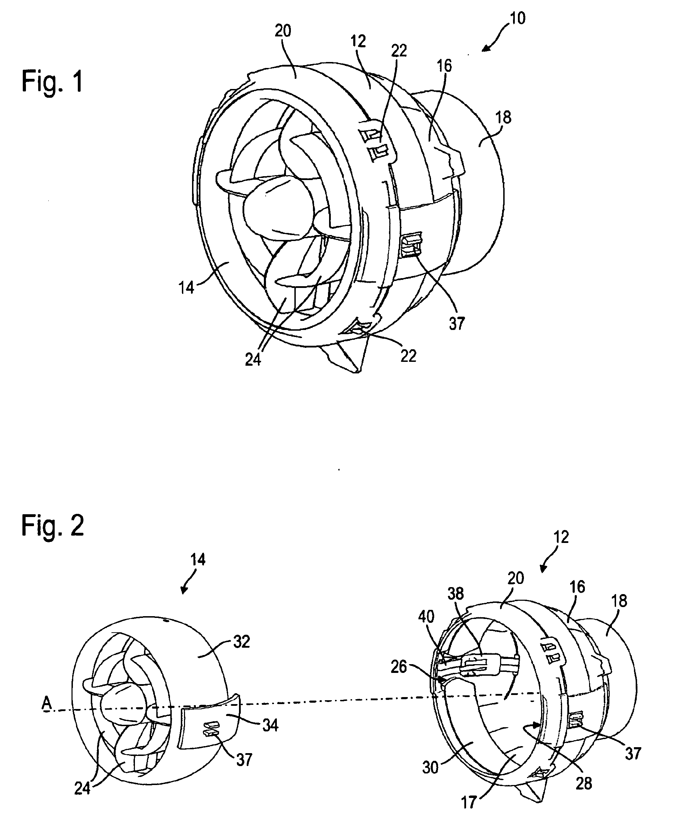

Der in Figur 1 gezeigte Luftausströmer 10 weist ein Gehäuse 12 auf, in dem eine Luftleiteinrichtung 14 schwenkbar relativ zu einer Längsachse A des Luftausströmer 10 gelagert ist. Das Gehäuse 12 ist gebildet durch ein erstes Gehäuseteil 16 und ein zweites Gehäuseteil 20. Das erste Gehäuseteil 16 enthält eine im Wesentlichen halbkugelförmig ausgebildete Innenfläche 17 (siehe auch Figur 2) sowie einen Anschluss 18, um den Luftausströmer 10 mit einem Lüftungskanal zu verbinden. Das zweite Gehäuseteil 20 des Gehäuses 12 ist ringförmig ausgebildet und kann mit mehreren Rastverbindungen 22 am ersten Gehäuseteil 16 montiert werden.

Die Luftleiteinrichtung 14 ist im Wesentlichen kugelabschnittsförmig ausgebildet und hat mehrere konzentrisch und radial angeordnete Lamellen 24 zur Umlenkung eines Luftstroms. Die Luftleiteinrichtung 14 wird in einem ersten Montageschritt in das erste Gehäuseteil 16 eingesetzt und anschließend durch das Aufsetzen des zweiten Gehäuseteils fixiert. Am zweiten Gehäuseteil 20 ist ein Dichtungselement 21 vorgesehen, das den Spalt zwischen Gehäuse 12 und Luftleiteinrichtung 14 abdichten kann.

Der Luftausströmer 10 weist eine Lagerung 26 sowie ein der Lagerung in radialer Richtung R gegenüberliegend angeordnetes Gleitlager 28 auf, um die Luftleiteinrichtung 14 zur die Längsachse A des Luftausströmers 10 schwenkbar im Gehäuse zu lagern.

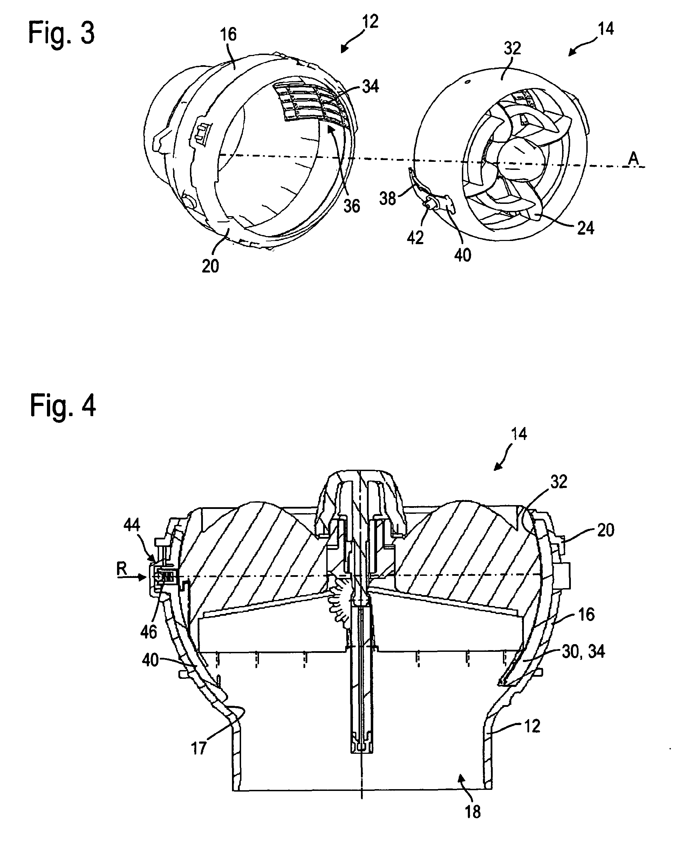

Das Gleitlager 28 hat hier eine erste Gleitfläche 30, die an der Innenfläche 17 des Gehäuses 12 vorgesehen ist, sowie eine zweite Gleitfläche 32, die hier der Außenfläche der Luftleiteinrichtung 14 entspricht. Die erste Gleitfläche 30 ist an einem Gleitelement 34 gebildet, das hier aus einem Silikonmaterial hergestellt und elastisch verformbar ist. Wie in Figur 3 zu sehen ist, ist am Gehäuse 12 eine Aussparung 36 vorgesehen, in der das Gleitelement 34 mit einer Rastverbindung 37 befestigt ist, so dass das Gleitelement 34 nur minimal von der Innenfläche 17 des Gehäuses 12 vorsteht.

Die Lagerung 26 weist einen Gleiter 38 auf, der an der Luftleiteinrichtung 14 befestigt ist, sowie eine Schiene 40, die mit einem Schwenkzapfen 42 schwenkbar am Gehäuse 12 gelagert ist.

Durch den Verschieben des Gleiters 38 auf der Schiene 40 kann die Luftleiteinrichtung 14 bezüglich Figur 2 horizontal verschwenkt werden. Durch den Schwenkzapfen 42 kann die Luftleiteinrichtung bezüglich Figur 2 vertikal verschwenkt werden. Somit ist die Beweglichkeit einer kardanischen Aufhängung mit zwei zueinander senkrechten Schwenkachsen gegeben, mittels der die Luftleiteinrichtung 14 in jede beliebige Richtung verschwenkt werden kann.

Wie insbesondere in Figur 4 zu sehen ist, ermöglicht die Lagerung 26 eine Beweglichkeit in radialer Richtung R, sodass die Position der der Luftleiteinrichtung 14 relativ zur Gleitfläche 30 veränderlich ist. Insbesondere kann die Luftleiteinrichtung 14 gegen die Gleitfläche 30 beaufschlagt werden. Hierzu ist an der Lagerung 26 eine Vorspanneinrichtung 44 vorgesehen. Die Vorspanneinrichtung 44 hat eine Feder 46, die die Luftleiteinrichtung 14 mit einer in radialer Richtung R gegen das Gleitlager gerichteten Kraft beaufschlagen kann. Durch die Beaufschlagung der Luftleiteinrichtung 14 mit einer gegen das Gleitlager 28 gerichteten Kraft kann ein eventuelles Spiel zwischen Luftleiteinrichtung 14 und Gehäuse 12 ausgeglichen werden. Somit ist die Luftleiteinrichtung 14 mittels der Lagerung 26 und dem Gleitlager 28 spielfrei gelagert.

Die Vorspanneinrichtung 44 kann beispielsweise ein Federelement aufweisen, das konstant die Luftleiteinrichtung 14 mit einer gegen das Gleitlager 28 gerichteten Kraft beaufschlagen kann. Es ist aber auch denkbar, dass die Vorspanneinrichtung 44 eine Stellvorrichtung aufweist, die entweder die Federkraft einstellen kann oder die Position der Lagerung 26 zum Gleitlager 28 justieren kann. Es kann auch vorgesehen sein, dass der Gleiter 38 beispielsweise gewölbt ausgeführt ist, so dass er die Luftleiteinrichtung 14 elastisch gegen das Gleitlager 28 beaufschlagt.

Statt der hier gezeigten Ausführungsform der Lagerung 26 sind auch andere Lagerungsarten denkbar.

Statt des hier verwendeten Silikons können auch andere flexibel nachgiebige Materialien mit guten Gleiteigenschaften, beispielsweise TPE, TPU oder Naturkautschuk verwendet werden. Es ist auch denkbar, dass das Gleitelement an der Luftleiteinrichtung 14 befestigt ist.

## Patentansprüche

1. Luftausströmer (10) mit einem Gehäuse (12) und einer im Gehäuse (12) verschwenk- und verdrehbar gelagerten Luftleiteinrichtung (14) mit einer allgemein kugelabschnittsförmigen Außenfläche,
einer an der Luftleiteinrichtung (14) vorgesehenen zweiten Gleitfläche (32) aufweist,
wobei der Luftausströmer (10) eine zwischen Gehäuse (12) und Luftleiteinrichtung (14) angeordnete Lagerung (26) aufweist, mit der die Luftleiteinrichtung (14) um zumindest eine Schwenkachse verschwenkbar am Gehäuse (12) gelagert ist, **dadurch gekennzeichnet, dass** der Luftausströmer (10) ein Gleitlager (28) mit einer am Gehäuse (12) vorgesehenen, der Luftleiteinrichtung (14) zugewandten ersten Gleitfläche (30) und , und dass
die Lagerung (26) dem Gleitlager (28) in radialer Richtung (R) gegenüberliegend angeordnet ist und an der Lagerung (26) eine Vorspanneinrichtung (44) vorgesehen ist, die die Luftleiteinrichtung (14) mit einer gegen das Gleitlager (28) gerichteten Kraft beaufschlagen kann.

2. Luftausströmer nach Anspruch 1, **dadurch gekennzeichnet, dass** die Vorspanneinrichtung (44) ein Federelement aufweist, das die Luftleiteinrichtung (14) mit einer gegen das Gleitlager (28) gerichteten Kraft beaufschlagen kann.

3. Luftausströmer nach Anspruch 1 oder 2, **dadurch gekennzeichnet, dass** die Vorspanneinrichtung (44) eine Stellvorrichtung aufweist, mit der die gegen das Gleitlager (28) gerichtete Kraft eingestellt werden kann.

4. Luftausströmer nach einem der vorhergehenden Ansprüche, **dadurch gekennzeichnet, dass** zumindest eine der Gleitflächen (30, 32) ein Gleitelement (34) aus einem flexibel nachgiebigen Material, insbesondere TPE, TPU, Silikon oder Naturkautschuk aufweist.

5. Luftausströmer nach Anspruch 4, **dadurch gekennzeichnet, dass** am Gehäuse (12) und/oder an der Luftleiteinrichtung (14) eine Aussparung (36) vorgesehen ist, in der das Gleitelement (34) zumindest teilweise liegt.

6. Luftausströmer nach einem der vorhergehenden Ansprüche, **dadurch gekennzeichnet, dass** die Lagerung (26) eine Schiene (40) und einen an der Schiene (40) verschiebbar gelagerten Gleiter (38) aufweist.

7. Luftausströmer nach Anspruch 6, **dadurch gekennzeichnet, dass** der Gleiter (38) an der Luftleiteinrichtung (14) befestigt ist.

8. Luftausströmer nach einem der vorhergehenden Ansprüche, **dadurch gekennzeichnet, dass** die Lagerung (26) einen Schwenkzapfen (42) aufweist, um den die Luftleiteinrichtung (14) verschwenkt werden kann.

9. Luftausströmer nach Anspruch 8, **dadurch gekennzeichnet, dass** der Schwenkzapfen (42) die Schiene (40) mit dem Gehäuse (12) koppelt.

10. Luftausströmer nach einem der vorhergehenden Ansprüche, **dadurch gekennzeichnet**, das zwischen Gehäuse (12) und Luftleiteinrichtung (14) ein Dichtungselement vorgesehen ist.

## Claims

1. An air vent (10) comprising a housing (12) and an air guiding means (14) which is pivotally and rotatably mounted in the housing (12) and has an outer surface having the general shape of a spherical segment,
the air vent (10) having a support (26) arranged between the housing (12) and the air guiding means (14), by means of which the air guiding means (14) is mounted at the housing (12) for pivotal movement about at least one swiveling axis, **characterized in that** the air vent (10) has a sliding bearing (28) which includes a first sliding surface (30) provided on the housing (12) and facing the air guiding means (14), and a second sliding surface (32) provided on the air guiding means (14), and **in that**
the support (26) is arranged opposite the sliding bearing (28) in the radial direction (R), and a prestressing means (44) is provided on the support (26), which is adapted to act on the air guiding means (14) with a force directed against the sliding bearing (28).

2. The air vent according to claim 1, **characterized in that** the prestressing means (44) has a spring element which is adapted to act on the air guiding means (14) with a force directed against the sliding bearing (28).

3. The air vent according to claim 1 or 2, **characterized in that** the prestressing means (44) has an adjusting device by means of which the force directed against the sliding bearing (28) can be adjusted.

4. The air vent according to any of the preceding claims, **characterized in that** at least one of the sliding surfaces (30, 32) has a sliding element (34) made from a flexibly elastic material, in particular TPE, TPU, silicone or natural rubber.

5. The air vent according to claim 4, **characterized in that** a recess (36) in which the sliding element (34) is at least partially arranged is provided on the housing (12) and/or on the air guiding means (14).

6. The air vent according to any of the preceding claims, **characterized in that** the support (26) has a rail (40) and a slider (38) shiftably mounted to the rail (40).

7. The air vent according to claim 6, **characterized in that** the slider (38) is attached to the air guiding means (14).

8. The air vent according to any of the preceding claims, **characterized in that** the support (26) has a swivel pin (42) about which the air guiding means (14) can be swiveled.

9. The air vent according to claim 8, **characterized in that** the swivel pin (42) couples the rail (40) with the housing (12).

10. The air vent according to any of the preceding claims, **characterized in that** a sealing element is provided between the housing (12) and the air guiding means (14).

## Revendications

1. Diffuseur d'air (10), comportant un boîtier (12) et un dispositif de guidage d'air (14) qui est monté à pivotement et mobile en rotation dans le boîtier (12) et présente une surface extérieure généralement en forme de segment sphérique,
le diffuseur d'air (10) présentant un support (26) agencé entre le boîtier (12) et le dispositif de guidage d'air (14) au moyen duquel le dispositif de guidage d'air (14) est monté sur le boîtier (12) à pivotement autour d'au moins un axe de pivotement, **caractérisé en ce que** le diffuseur d'air (10) comporte un palier à glissement (28) présentant une première surface de glissement (30) qui est prévue sur le boîtier (12) et est tournée vers le dispositif de guidage d'air (14), ainsi qu'une deuxième surface de glissement (32) prévue sur le dispositif de guidage d'air (14), et **en ce que**
le support (26) est agencé en face du palier à glissement (28) dans la direction radiale (R) et **en ce qu'**un dispositif de précontrainte (44) est prévu sur le support (26), lequel est apte à solliciter le dispositif de guidage d'air (14) avec une force dirigée à l'encontre du palier à glissement (28).

2. Diffuseur d'air selon la revendication 1, **caractérisé en ce que** le dispositif de précontrainte (44) présente un élément ressort qui est apte à solliciter le dispositif de guidage d'air (14) avec une force dirigée à l'encontre du palier à glissement (28).

3. Diffuseur d'air selon la revendication 1 ou 2, **caractérisé en ce que** le dispositif de précontrainte (44) présente un dispositif d'ajustage au moyen duquel la force dirigée à l'encontre du palier à glissement (28) peut être ajustée.

4. Diffuseur d'air selon l'une des revendications précédentes, **caractérisé en ce qu'**au moins l'une des surfaces de glissement (30, 32) présente un élément de glissement (34) en une matière élastique flexible, en particulier en TPE, TPU, silicone ou caoutchouc naturel.

5. Diffuseur d'air selon la revendication 4, **caractérisé en ce qu'**un évidement (36) dans lequel l'élément de glissement (34) est au moins partiellement agencé est prévu sur le boîtier (12) et/ou sur le dispositif de guidage d'air (14).

6. Diffuseur d'air selon l'une des revendications précédentes, **caractérisé en ce que** le support (26) présente un rail (40) et une pièce glissante (38) montée mobile en translation sur le rail (40).

7. Diffuseur d'air selon la revendication 6, **caractérisé en ce que** la pièce glissante (38) est fixée sur le dispositif de guidage d'air (14).

8. Diffuseur d'air selon l'une des revendications précédentes, **caractérisé en ce que** le support (26) présente un tourillon (42) autour duquel le dispositif de guidage d'air (14) peut être pivoté.

9. Diffuseur d'air selon la revendication 8, **caractérisé en ce que** le tourillon (42) couple le rail (40) au boîtier (12).

10. Diffuseur d'air selon l'une des revendications précédentes, **caractérisé en ce qu'**il est prévu un élément d'étanchéité entre le boîtier (12) et le dispositif de guidage d'air (14).
